# EUROPÄISCHE PATENTSCHRIFT

(11) **EP 0 264 863 B1**
(45) Veröffentlichungstag und Bekanntmachung des Hinweises auf die Patenterteilung: **26.01.1994**
(21) Anmeldenummer: 87115196.5
(22) Anmeldetag: 17.10.1987
(51) Int. Cl.: G09B 29/10

(54) **Vorrichtung zum Auffinden einer Einzelheit**
Device for locating a detail
Dispositif pour localiser un détail

(30) Priorität: 21.10.1986 DE 3635654
(43) Veröffentlichungstag der Anmeldung: 27.04.1988
(73) Patentinhaber: Linder, Klaus, 22089 Hamburg (DE)
(72) Erfinder: Linder, Klaus, 22089 Hamburg (DE)
(74) Vertreter: Siewers, Gescha, Dr.

(56) Entgegenhaltungen:
- DE-A- 1 900 536
- DE-A- 2 938 483
- FR-A- 1 044 903
- FR-A- 2 258 679
- US-A- 3 328 899

## Beschreibung

Die Erfindung betrifft eine Vorrichtung, mit deren Hilfe auf Land- bzw. Straßenkarten befindliche Einzelheiten schnell aufgefunden werden können.

Um das Suchfeld für den Kartenbetrachter einzuengen, ist üblicherweise auf Land- bzw. Sraßenkarten ein Rasternetz vorgesehen. Es besteht aus mehreren horizontalen und vertikalen Linien, die zum Zwecke ihrer genauen Identifikation mit Zahlen bzw. Buchstaben gekennzeichnet sind. In einem der Karte zugehörigen Verzeichnis sind bezogen auf die Lage der jeweiligen Einzelheiten (z.B. Straßen oder Orte) Koordinaten eines Rasterfeldes angegeben. Die Suche nach einer Einzelheit wird somit flächenmäßig begrenzt. Da das Rasternetz aus Gründen der zu erhaltenden Übersichtlichkeit aber nicht zu engmaschig auf das Kartenwerk aufgebracht werden kann, erfordert die Suche dennoch einen größeren Zeitaufwand, insbesondere dann, wenn sich eine Vielzahl von Einzelheiten im angegebenen Rasterfeld befindet.

Seit Jahrzehnten werden in unregelmäßigen Abständen Lösungen bekannt, die den beschriebenen Mangel weitestgehend abstellen sollen. Der überwiegende Teil folgt dabei dem Grundsatz einer weiteren, bis ins Detail gehende Kartenfeinrasterung, ohne diese jedoch auf das Kartenblatt direkt aufzutragen. Die in dieser Richtung wohl einfachste bekannte Möglichkeit ist die, eine mit Feinrastern versehene Folie auf ein Kartenblatt aufzulegen. Eine solche Variante ist für den Kartenbetrachter jedoch ebenso nachteilig wie ein direkt auf die Karte gedrucktes Raster. Ungeachtet der gegebenen Möglichkeit einer Einzelheitsbestimmung wird durch die geschaffene Unübersichtlichkeit der Aufwand für das Aufsuchen der Einzelheit kaum reduziert.

Weitere Lösungen, wie z.B. aus der US-A-3,328,899/DE-U-7 922 749 und US-A-2,891,314 bekannt, sehen zur Beseitigung der noch bestehenden Nachteile nur eine Feinskalierung der Kartenränder vor. Mit Hilfe von verschiebbaren Elementen entlang dieser Ränder und einer sich so ergebenden Punktüberschneidung beider Elemente wird die genaue Fixierung einer Einzelheit möglich. Parallel dazu sind Kartenregister vorgesehen, aus denen die jeweiligen Koordinaten der aufzufindenden Lage zu ersehen sind. Nachteilig bei derartigen Lösungen ist der meistenteils erforderliche, dem Gesamtkartenwerk um Umfang angepaßte Rahmen. Zudem muß der Kartenhersteller seine bisherige Rasteraufteilung und damit auch seine Art und Weise der Koordinatenangabe zu den Einzelheiten verändern. Der Kartenbetrachter wiederum ist dadurch gezwungen, von der konventionellen Handhabung abzugehen, womit sich für ihn derlei Lösungen als kompliziert darstellen.

Nachteile dieser Art sollen abgebaut werden, indem wie z.B. in FR-A-2 258 679 die übliche Kartenrasterung beibehalten wird und nur bezogen auf jedes einzelne Rasterfeld eine weitere Feinunterteilung vorgenommen wird. Hierdurch ist es jedoch erforderlich, die bisher zweistellige Koordinatenangabe im Register auf vier Stellen zu erweitern. Dies aber ist sowohl für den Kartenhersteller als auch für den Kartenbetrachter mit höherem Aufwand verbunden. Zudem läßt sich eine, nur ein Rasterfeld überdeckende Vorrichtung schlecht auf einer Karte befestigen, d.h. eine einmal aufgefundene Lage läßt sich insbesondere in Kraftfahrzeugen nicht beliebig lange fixieren.

In dieser Richtung besser sind Vorrichtungen, wie sie beispielsweise in DE-A-28 49 648, in DE-A-19 00 536 oder in US-A-2,516,569 beschrieben sind. Sie verwenden ein in ausreichendem Maß über das Kartenwerk ragendes Feinrasterelement, an welchem ein Schieber angeordnet ist. Ein einmal gefundener Punkt kann auf diese Art beliebig lange fixiert werden. Nachteilig bei diesen Lösungen ist entweder die im Kartenregister übliche zweistellige Koordinatenangabe und die dann dennoch erforderliche Suche nach der Einzelheit im vorgegebenen Rasterfeld oder aber die relativ umfangreiche Registerangabe, deren Nachteile bereits genannt wurden.

Schließlich ist festzustellen, daß die aufzusuchenden Einzelheiten sowohl Punkte als auch sehr unterschiedliche Flächen (z.B. Straßen) sein können. Die bekannten Lösungen lassen nur in bezug auf das Bestimmen von Punkteinzelheiten Eindeutigkeit erkennen. Diese fehlt in Hinblick auf eine Flächenbestimmung. Die Anordnung von fensterartigen Durchbrüchen im Schieber, wie z.B. in DE-A-19 00 536 ist in dieser Richtung nur als Kompromiß beider Bestimmungsmöglichkeiten zu bewerten soweit fensterartige Elemente oberhalb und unterhalb des Schieberelementes vorgesehen sind, bedeutet dies im übrigen auch wieder die Notwendigkeit, die Einzelheit innerhalb dieses Fensters separat zu suchen und außerdem ist ein gewisser Abdeckeffekt durch die Fensterelemente hinzunehmen, selbst wenn diese aus durchscheinendem Material bestehen. Hierunter leidet die Übersichtlichkeit, so daß das Aufsuchen einer Einzelheit mit Hilfe einer solchen Vorrichtung, wie sie in der DE-A- 19 00 536 angegeben ist, relativ zeitaufwendig ist.

Zusammenfassend ist festzustellen, daß die bisherigen Lösungen es nicht vermochten, den Aufwand beim Kartenhersteller in vertretbaren Grenzen zu halten und gleichzeitig eine vom Kartenbetrachter als unkompliziert anzusehende Handhabung zu gewährleisten. Ein Kartenwerk, das prinzipiell mit einer Hilfsvorrichtung zum Auffinden einer Einzelheit ausgestattet ist, war daher bislang nicht auf dem Markt präsent.

Der Erfindung liegt daher die Aufagabe zugrunde, eine Vorrichtung zu schaffen, die ein schnelles Auffinden von Einzelheiten in Kartenwerken ermöglicht. Dabei soll der Aufwand für den Kartenhersteller niedrig und die Handhabung für den Kartenbetrachter durch einen geringen Umfang der Koordinatenangaben zur Lage der Einzelheit unkompliziert sein. Darüber hinaus soll ein präzises Auffinden sowohl von Punkt- als auch von Flächeneinzelheiten möglich sei.

Erfindungsgemäß wird die Aufgabe durch eine Vorrichtung zum Auffinden einer Einzelheit auf Land- oder Straßenkarten mit den Merkmalen des Anspruches 1 gelöst.

Die Erfindung geht dabei aus von einem Kartenwerk, was nur an einer Kante die übliche Grobrasterung aufweist. Zum Zwecke einer einfachen Erläuterung wird angenommen, daß diese Kante sich horizontal am oberen Kartenrand erstreckt. Ein Schablonengrundkörper dessen Breite mindestens eine Teilung der Grobskalierung umfaßt und dessen Länge die Karte in vertikaler Richtung überdeckt, ist am oberen Kartenrand festklemmbar. Er besitzt entlang seiner Längserstreckung eine Skalierung. Entlang dieser Skalierung läßt siche in auf den Grundkörper befindliches und ihn in seiner Breite überdeckendes Schiebestück bewegen. Auf dem Schiebestück ist in horizontaler Richtung eine Linie und eine Skalierung, deren Teilung der der Grundkörperskalierung entspricht, aufgebracht. Die Breite des Schiebestückes ist so bemessen, daß die Linie mit jedem Strich der Grundkörperskalenteilung in Übereinstimmung gebracht werden kann. Auf dem Schiebestück ist ein weiteres Schiebeelement, es sei Lasche genannt, aufgebracht. Ihre Konstellation gegenüber dem Schiebestück ist ähnlich wie die Stellung des Schiebestückes zum Schablonengrundkörper, d.h. auf der Lasche ist eine Linie aufgebracht, die mit jedem Teilstrich der Schiebestückskalenteilung in Übereinstimmung gebracht werden kann.

Die Skalenteilung auf dem Schablonengrundkörper und demgemäß auch die des Schiebestückes ist so eng, daß ein mit dieser Teilung gebildetes Quadrat in seiner Fläche vergleichbar groß ist mit der Fläche der kleinsten im Kartenwerk aufzusuchenden Einzelheit.

Mit den beschriebenen und so angeordneten Einzelteilen läßt sich die Lage jeder Einzelheit auf dem vom Schablonengrundkörper überdeckten Kartenfeld mit zwei Koordinatenangaben darstellen. Eine transparente Ausführung aller Einzelteile ist dabei eine Voraussetzung.

Das dem Kartenwerk zugehörige Register, in dem die aufzufindenden Einzelheiten in üblicher Weise aufgelistet sind, enthält neben den sich jeweils auf die Schablonengrundkörper- bzw. Schiebestückskalierungen beziehenden Angaben lediglich einen, den Anlagepunkt des Grundkörpers am oberen Kartenrand betreffenden Vermerk. Ist die zu bestimmende Einzelheit in ihrem Umfang größer als ein durch die kleinste Skalenteilung gebildetes Quadrat (z. B. Straße), so bezieht sich die Koordinatenangabe auf den Mittelpunkt der Einzelheit.

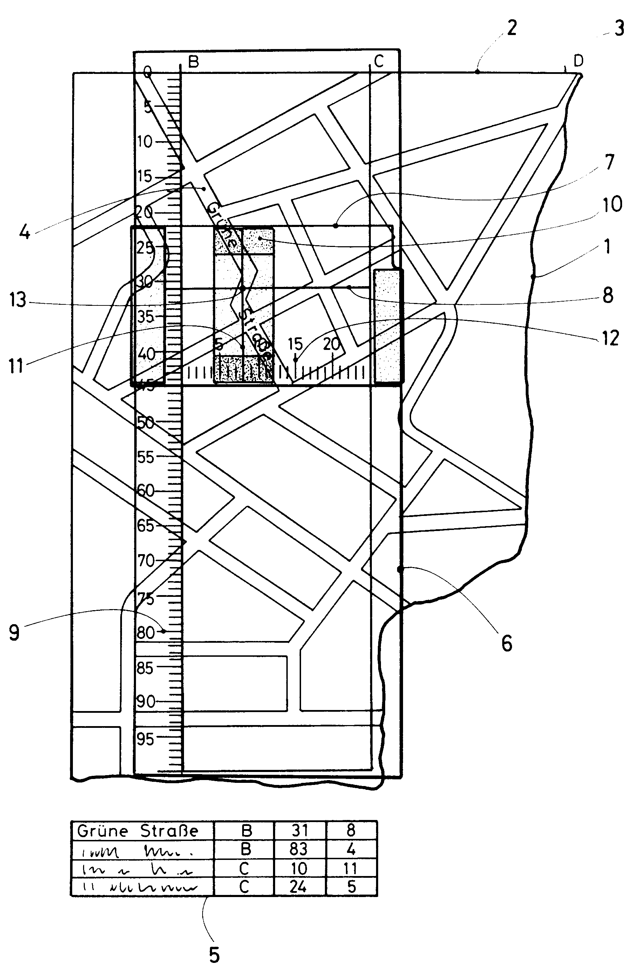

Anhand der Zeichnung, die eine Draufsicht auf eine Straßenkarte mit aufgelegter Vorrichtung und einen Kartenregisterauszug zeigt, wird die Erfindung näher erläutert.

Das Kartenwerk 1 hat an seinem oberen Rand 2 die übliche Grobskalierung 3. Die Lage der aufzufindenen Einzelheit 4 "grüne Straße" ist durch die Kartenregisterangaben 5, die sich auf den Flächenmittelpunkt der Einzelheit beziehen, mit B 31/8 definiert. Die erste Zahlenangabe wird auf den Schablonengrundkörper 6 eingestellt. Dies geschieht, indem durch Verschieben des Schiebestückes 7 die auf diesem Schiebestück 7 aufgebrachte Linie 8 mit der Zahlenangabe 31 der Schablonengrundkörperskala 9 in Übereinstimmung gebracht wird. Zur nunmehr erforderlichen Einstellung der zweiten Zahlenangabe wird die Lasche 10 auf dem Schiebestück 7 verschoben, bis die darauf befindliche Linie 11 mit der Zahlenangabe 8 der Schiebestückskala 12 in Übereinstimmung gebracht wurde. Die Linien 8 und 11 kreuzen sich so einander im Schnittpunkt 13, der durch die Koordinaten 31/8 definiert ist. Nachdem die Einzelteile Schablonengrundkörper 6, Schiebestück 7 und Lasche 10 in diese Lage gebracht wurden, ist der Schablonengrundkörper 6 lediglich bündig mit dem Kartenrand 2 am Punkt B der Kartengrobskalierung 3 anzulegen. Die aufzufindende Einzelheit 4 befindet sich in ihrem Flächenmittelpunkt unmittelbar im Linienschnittpunkt 13.

Der Schablonengrundkörper 6, das Schiebestück 7 und die Lasche 10 sind vorzugsweise aus einer Hartfolie gefertigt. Alle diese Teile besitzen an den ihre Länge begrenzenden Seiten einen Klemmumbug. Dieser gestattet es, den Schablonengrundkörper 6 am Kartenrand 2 festzuklemmen, das Schiebestück 7 auf den Schablonengrundkörper 6 beweglich anzuordnen, ohne daß es von diesem abgezogen werden kann und die Lasche 10 beweglich auf dem Schiebestück 7 anzubringen, ohne daß diese abgestriffen werden kann. Die Skalierung 9 und 12 sind ebenso wie die Linien 8 und 11 in bekannter Weise auf das Hartfolienmaterial des Schablonengrundkörpers 6 des Schiebestückes 7 und der Lasche 10 aufgebracht.

Eine wie in diesem Ausführungsbeispiel beschriebene Vorrichtung hält die vom Kartenhersteller vorzunehmenden Veränderungen in Grenzen, d.h. dieser braucht lediglich einen Kartenrand grob zu skalieren und ansonsten von jeder Einzelheit wie üblich zwei Koordinaten feststellen und im Register vermerken. Für den Kartenbetrachter ist die Koordinateneinstellung einfach und durch die nachfolgende Anlage an der Kartengrobskalierung nicht weit entfernt von der üblichen Verfahrensweise bei der Suche nach bestimmten Einzelheiten. Das Aufsuchen selbst minimiert sich in seinem Umfang derart, daß zum Auffinden der Einzelheit nur zwei Einstellhandgriffe und das Anlegen bzw. Einhängen des Schablonengrundkörpers erforderlich sind. Darüber hinaus ermöglicht es die Vorrichtung, sowohl Punkt- als auch Flächeneinzelheiten mit nahezu gleicher Präzision aufzufinden. Außerdem kann eine einmal aufgesuchte Stelle beliebig lange fixiert bleiben.

Neben der Benutzung dieser Vorrichtung für Land- bzw. Straßenkarten ist auch eine Verwendung für das Auffinden von Einzelheiten beispielsweise in technischen Zeichnungen oder Schnittmusterbögen denkbar.

## Patentansprüche

1. Vorrichtung zum Auffinden einer Einzelheit auf Land- bzw. Straßenkarten mit üblicher Grobrasterung, bestehend aus einem die Karte überdeckenden Schablonengrundkörper (6), der eine Skaleneinteilung (9) über seine gesamte Länge aufweist, und dessen Breite einer Kartengrobrastereinteilung entspricht, aus einem aus auf dem Schablonengrundkörper (6) beweglich angeordneten Schiebestück (7) auf dem eine Linie (8) und eine Skalierung (12) angeordnet sind, und aus einem Kartenregister (5), das Angaben zu den Einzelheiten aufweist und auf einer auf dem Schiebestück (7) beweglich angordneten Lasche (10) mit aufgebrachter Markierungslinie (11), dadurch gekennzeichnet, daß die Skaleneinteilung (12) des Schiebestückes (7) und die des Schablonengrundkörpers (6) identisch sind, daß das Kartenregister je Einzelheit drei Angaben enthält, daß die Koordinaten jeder Einzelheit im Kartenregister (5) durch Angabe der entsprechenden Kennzeichnung des Grobrasters (3) sowie des Schnittpunktes der jeweiligen Kennzeichnungen in der Skalierungen des Schablonengrundkörpers (6) und des Schiebestückes (7) gegeben sind, wobei bei einer als Fläche ausgebildeten Einzelheit die Kartenregisterangaben sich aus dem Flächenmittelpunkt bestimmen, und daß sich die Einzelheit im Schnittpunkt der Linien (8) und (11) befindet, wenn die Linien (8) und (11) gemäß den zur Einzelheit gehörenden Angaben im Kartenregister (5) mit der dazugehörigen Kennzeichnung der Skalierungen auf Grundkörper (6) und Schiebestück (7) in Übereinstimmung stehen.

2. Vorrichtung nach Anspruch 1, dadurch gekennzeichnet, daß auf dem Kartenwerk (1) nur auf einem Rand (2) eine Grobskalierung (3) angeordnet ist.

3. Vorrichtung nach Anspruch 1, dadurch gekennzeichnet, daß der Schablonengrundkörper (6), daß Schiebestück (7) und die Lasche (10) an den ihre Länge begrenzenden Seiten einen Klemmumbug besitzen.

## Claims

1. Apparatus to locate a detail on a map or road map with usual coarse screen, consisting of a pattern base (6), covering the map, with a scale (9) over its whole length, and with a width corresponding to one unit of the coarse screen of the map, a sliding device (7), movable on the pattern base (6), to which a line (8) and a scale (12) are affixed, and an index (5), containing data of the details of the map, and a strap (10) with attached marking line (11), which is arranged movably on the sliding device (7), characterized in that said scale (12) of said sliding device (7) and said scale of said pattern base (6) are identical, said index (5) contains three data per detail of the map, the co-ordinates of each detail in said index (5) are given by the corresponding mark of said coarse screen (3) and the intersection point of the corresponding marks on the scales of said pattern base (6) and said sliding device (7), whereby, in case of a detail covering an area, the given data in said index are the data of the center of the area, and that said detail is in the intersection point of said lines (8) and (11), whereby said lines (8) and (11) are placed in accordance with the marks on said scales on said pattern base (6) and said sliding device (7) corresponding to the data of said detail given in said index (5).

2. Apparatus according to claim 1, characterized in that a coarse screen (3) is affixed only at one edge (2) of said map (1).

3. Apparatus according to claim 1, characterized in that said pattern base (6), said sliding device (7) and said strap (10) have a clamp at the edges that limit their lengths.

## Revendications

1. Dispositif qui sert à trouver un détail sur une carte géographique ou routière à réseau grossier habituel, composé d'un corps de base de calibre (6), couvrant la carte qui dispose d'une échelle (9) sur toute sa longueur et dont la largeur correspond à un intervalle de la graduation du réseau grossier de la carte, d'un dispositif de poussée (7), mobile sur le corps de base du calibre (6), sur lequel est établi une ligne (8) et une échelle graduée (12), et d'une table des matières de la carte (5) présentant des données concernant les détails de la carte, et d'une languette (10), mobile sur le dispositif de poussée (7), avec ligne de marquage (11), caractérisé en ce que l'échelle graduée (12) du dispositif de poussée (7) et celle du corps de base du calibre (6) sont identiques, que la table des matières de la carte contient trois données par détail de la carte que les coordonnées de chaque détail dans la table des matières de la carte (5) sont données par application de l'indice du réseau grossier (3) aussitôt que du point d'intersection des applications dans les échelles du corps de base du calibre (6) et du dispositif de poussée (7) ou, en cas d'un détail couvrant une surface, les données dans la table des matières se substituent du centre de la surface, et que la particularité se trouve au point d'intersection des lignes (8) et (11) quand les lignes (8) et (11) correspondent aux coordonnées de repère sur le corps de base du calibre (6) et sur le dispositif de poussée selon les données du détail dans la table des matières de la carte (5).

2. Dispositif selon revendication 1, caractérisé en ce que sur la carte (1), une graduation d'échelle grossière (3) est établie uniquement sur un bord (2).

3. Dispositif selon revendication 1, caractérisé en ce que le corps de base du calibre (6), le dispositif de poussée (7) et la languette (10) possèdent un pince-nez aux bords qui limitent leurs longueurs.
